# EUROPÄISCHE PATENTSCHRIFT

(11) **EP 1 840 444 B1**
(45) Veröffentlichungstag und Bekanntmachung des Hinweises auf die Patenterteilung: **13.05.2009**
(21) Anmeldenummer: 07005539.7
(22) Anmeldetag: 19.03.2007
(51) Int. Cl.: F16L 59/14, F16L 59/153, B29C 44/20, B29C 47/20

(54) **Verfahren zur Herstellung eines Mantels für ein wärmeisoliertes Leitungsrohr**
Process to produce a cladding for a heat insulated conduit
Procédé pour la production d'un manteau pour conduite isolée thermiquement

(30) Priorität: 28.03.2006 DE 102006014235
(43) Veröffentlichungstag der Anmeldung: 03.10.2007
(73) Patentinhaber: BRUGG Rohr AG, Holding, 5200 Brugg (CH)
(72) Erfinder: Rudi, Roberto, 5107 Schinznach-Dorf (CH); Bolli, Anja, 7078 Lenzerheide (CH)

(56) Entgegenhaltungen:
- EP-A1- 0 342 750
- EP-A1- 0 897 788
- WO-A-01/56773
- DE-A1- 1 919 836
- DE-A1- 19 531 631
- DE-U1- 20 011 306
- US-A- 4 108 806

## Beschreibung

Die Erfindung betrifft ein Verfahren zur Herstellung eines geschäumten Mantels für ein flexibles wärmeisoliertes Leitungsrohr.

Aus der EP 0 897 788 ist ein wärmeisoliertes Leitungsrohr bekannt, welches aus einem Innenrohr, einer das Innenrohr umgebenden Wärmedämmschicht auf der Basis von Polyurethanschaum sowie einem Außenmantel besteht. Das bekannte Leitungsrohr kann in einem kontinuierlichen Arbeitsgang in großen Längen hergestellt werden. Der durch Extrusion hergestellte Außenmantel besteht aus Polyethylen und weist eine gewellte Oberfläche auf.

Ein wichtiges Anwendungsgebiet für das bekannte Leitungsrohr ist der Transport von Fernwärme. Dabei wird das Leitungsrohr im Erdreich verlegt.

Sowohl bei der Herstellung als auch bei der Verlegung ist der Mantel des Leitungsrohres erheblichen mechanischen Belastungen ausgesetzt. Durch das Auftrommeln auf Kabeltrommeln wird der Mantel durch Zugkräfte und Biegekräfte beansprucht. Beim Verlegen im Erdreich wird der Mantel durch Abriebkräfte beansprucht. Diese Kräfte werden von einem herkömmlichen Mantel aus Polyethylen beherrscht.

Andererseits resultiert aus den hohen mechanischen Festigkeitswerten des Mantels auch eine höhere Steifigkeit des Leitungsrohres, so daß ein bestimmter Biegeradius nicht unterschritten werden kann. Das bekannte Leitungsrohr wird entweder auf handelsüblichen Kabeltrommeln oder zu einem Ringbund gewickelt zum Verwendungsort transportiert. Große Durchmesser der mit dem Leitungsrohr bewickelten Kabeltrommeln bzw. Ringbunde mit großem Durchmesser bereiten Probleme beim Transport zum Verlegeort. Auch beim Verlegen erweist sich eine geringe Flexibilität des Leitungsrohres als nachteilig, da das Leitungsrohr nicht um enge Radien gebogen werden kann.

Aus der DE 200 11 306 ist ein flexibles wärmeisoliertes Leitungsrohr bekannt mit einem gewellten Metallrohr, einer das Metallrohr umgebenden Wärmedämmschicht sowie einem Außenrohr aus Kunststoff, wobei der Kunststoff aufgeschäumt ist. Obwohl die äußerste Schicht als Mantel bezeichnet ist, handelt es sich hierbei um eine zweite Wärmedämmschicht, die eine größere Wanddicke als die eigentliche Wärmedämmschicht aufweist. Die äußere aufgeschäumte Schicht soll weich sein und ist deshalb als Mantelschicht für erdverlegte wärmeisolierte Leitungsrohre nicht geeignet.

Der vorliegenden Erfindung liegt von daher die Aufgabe zugrunde, ein Verfahren anzugeben, ein Leitungsrohr der eingangs erwähnten Art herzustellen, dessen Biegbarkeit bzw. Flexibilität erhöht wird, ohne daß die mechanischen Eigenschaften des Mantels sich wesentlich verschlechtern.

Diese Aufgabe wird durch die im Anspruch 1 erfaßten Merkmale gelöst.

Neben den sich aus der Aufgabenstellung direkt ergebenden Vorteilen entsteht durch die Erfindung noch der Vorteil, daß das auf diese weise produzierte Leitungsrohr ein geringeres Gewicht als das bekannte Leitungsrohr aufweist. Weiterhin entsteht eine erhebliche Kostenersparnis durch Materialeinsparung, die um so höher ist, je höher der Aufschäumgrad, d. h. je höher der Anteil von Zellen im Mantel ist.

Besonders geeignete Werkstoffe für den Mantel sind Polyethylen niedriger Dichte (LDPE), lineares Polyethylen niedriger Dichte (LLDPE) sowie Ethylen-Copolymere auf der Basis von Polyethylen niedriger Dichte.

Der Aufschäumgrad des Materials für den Mantel liegt bevorzugt zwischen 10 und 60 %, d. h. 10 bis 60 % des Volumens bestehen aus mit Gas gefüllten Zellen. Bei den Zellen handelt es sich um Zellen mit einem Durchmesser von weniger als 0,5 mm.

Das Verhältnis von Granulat auf Polyethylenbasis und Granulat auf Polyethylenbasis, dem Kügelchen zugefügt sind, liegt zwischen 90 : 10 und 99 : 1. Hieraus resultiert der Vorteil, daß die Kügelchen exakt zudosiert werden können und somit der gewünschte Aufschäumgrad genau eingestellt werden kann. Die Kügelchen sind Hohlkugeln, die mit einem Gas gefüllt sind.

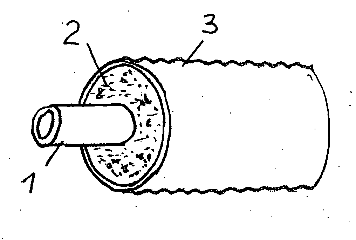

Ein mit der Erfindung produziertes Leitungsrohr ist anhand des in der Figur schematisch dargestellten Ausführungsbeispiels näher erläutert.

In der Figur ist mit 1 ein Innenrohr, mit 2 eine Wärmedämmschicht auf der Basis von Polyurethanschaum und mit 3 ein Außenmantel auf der Basis von Polyethylen bezeichnet.

Das Herstellungsverfahren ist an sich aus der EP 0897 788 B1 bekannt.

An Stelle des einzelnen Innenrohres 1 können bis zu vier Innenrohre vorgesehen sein. Das oder die Innenrohre bestehen vorzugsweise aus vernetztem Polyethylen. Zwischen der Wärmedämmschicht 2 und dem Außenrohr 3 ist noch eine nicht näher bezeichnete Folie vorgesehen, welche zum einen als Form für den sich bei der Herstellung entwickelnden Polyurethanschaum zum anderen auch als Diffusionssperrschicht dient, um ein Entweichen des in den Zellen des Polyurethanschaums befindlichen Zellglases zu verhindern.

Nach der Lehre der Erfindung besteht das Außenrohr 3 aus einem aufgeschäumten Kunststoff auf der Basis von Polyethylen. Bevorzugt wird ein Polyethylen niedriger Dichte wie beispielsweise LDPE, VLDPE sowie LLDPE. Es kann aber auch ein Copolymer auf Basis LDPE eingesetzt werden.

Für die Herstellung des Außenrohres werden zunächst 97 - 99 Teile LDPE in Granulatform bereitgestellt. Dem LDPE-Granulat werden 1 bis 3 Teile eines Kunststoffgranulats, welches einen großen Anteil an Hohlkügelchen aus Kunststoff enthält, vor der Eingabe in den Mantelextruder zugemischt. Das Kunststoffgranulat kann aber auch gemeinsam mit dem LDPE-Granulat in den Mantelextruder eingegeben werden. In dem Mantelextruder wird das LDPE-Granulat zunehmend erwärmt und zum Schmelzen gebracht. Das Kunststoffgranulat wird dabei innig mit dem LDPE-Granulat bzw. der LDPE-Schmelze vermischt. Beim Austritt aus dem Mundstück des Mantelextruders expandiert das in den Hohlkügelchen befindliche Gas und bläht dabei die LDPE-Schmelze auf. Nach dem Abkühlen des Außenrohres weist dieses eine zellige Struktur auf. Die Hülle der Hohlkügelchen bleibt dabei erhalten, eine Verbindung mit dem die Matrix bildenden LDPE-Mantelmaterial erfolgt nicht.

Ein Außenrohr nach der Lehre der Erfindung weist folgende Werte auf:
E-Modul 135 - 162 MPa
Dichte 0,560 - 0,750 g/cm³

Die Gewichtsersparnis des Leitungsrohres nach der Lehre der Erfindung gegenüber dem , Leitungsrohr nach der EP 0 897 788 beträgt ca 3 - 15 % je nach Aufschäumgrad.

Die Flexibilität Leitungsrohres ist 10 - 30 % höher als bei einem Leitungsrohr mit herkömmlichem PE-Mantel, wobei die Flexibilität durch den Kraftaufwand bestimmt wird, der beim Biegen über einen definierten Radius erforderlich ist.

## Patentansprüche

1. Verfahren zur Herstellung eines geschäumten bzw. geblähten Mantels für ein flexibles wärmeisoliertes Leitungsrohr, wobei ein Gemisch aus Granulat auf der Basis von Polyethylen und einem Granulat auf der Basis von Polyethylen, dem ein Treibmittel in Form von Hohlkügelchen zugemischt ist, hergestellt wird, wobei das Gemisch in einen Extruder eingebracht, dort aufgeschmolzen, und die Schmelze in Form eines Rohres extrudiert und beim oder nach dem Austritt aus dem Extrudermundstück aufgeschäumt bzw. aufgebläht wird, wobei das Verhältnis von Granulat auf der Basis von Polyethylen und Granulat auf Basis von Polyethylen, dem ein Treibmittel zugemischt ist, zwischen 90 : 10 und 99 : 1 ist.

2. Verfahren nach Anspruch 1, **dadurch gekennzeichnet, daß** der E-Modul des geschäumten bzw. geblähten Mantelmaterials zwischen 135 und 162 Mpa beträgt und die Dichte des Mantelmaterials zwischen 0,560 und 750 g/cm³ liegt.

3. Verfahren nach Anspruch 1 oder 2, **dadurch gekennzeichnet, daß** der Mantel (3) gewellt wird.

4. Verfahren nach einem der Ansprüche 1 bis 3, **dadurch gekennzeichnet, daß** als thermoplastischer Kunststoff ein Polyethylen niedriger Dichte (LDPE) verwendet wird.

5. Verfahren nach einem der Ansprüche 1 bis 3, **dadurch gekennzeichnet, daß** als thermoplastischer Kunststoff ein lineares Polyethylen niedriger Dichte (LLDPE) verwendet wird.

6. Verfahren nach einem der Ansprüche 1 bis 3, **dadurch gekennzeichnet, daß** als thermoplastischer Kunststoff ein Copolymer des Ethylens, vorzugsweise ein Copolymer auf Basis von Polyethylen niedriger Dichte verwendet ist.

7. Verfahren nach einem der Ansprüche 1 bis 6, **dadurch gekennzeichnet, daß** der Aufschäumgrad des Mantels zwischen 10 und 60 % liegt.

8. Verfahren nach einem der Ansprüche 1 bis 7, **dadurch gekennzeichnet, daß** der Durchmesser der Zellen des geschäumten Mantels zwischen 0,1 mm und 0,5 mm liegt.

## Claims

1. A method for manufacturing a foamed or expanded jacket for a flexible thermally insulated conduit, wherein a mixture of granules based on polyethylene and granules based on polyethylene admixed with a foaming agent in the form of hollow balls is added, is manufactured, wherein the mixture is introduced into an extruder, where it is melted and the melt is extruded in form of a tube and upon or after exit from the extruder mouthpiece it is foamed or expanded, wherein the ratio of the granules based on polyethylene and granules based on polyethylene admixed with foaming agent lies between 90:10 and 99:1.

2. The method according to Claim 1, **characterised in that** the E-modulus of the foamed or expanded jacket material lies between 135 and 162 Mpa and the density of the jacket material lies between 0.560 and 750 g/cm³.

3. The method according to Claim 1 or 2, **characterised in that** the jacket (3) is corrugated.

4. The method according to one of Claims 1 to 3, **characterised in that** a polyethylene of low density (LDPE) is used as thermal plastic material.

5. The method according to Claims 1 to 3, **characterised in that** a linear polyethylene of low density (LLDPE) is used as thermal plastic material.

6. The method according to one of Claims 1 to 3, **characterised in that** a copolymer of ethylene, preferably a copolymer based on polyethylene of low density is used as thermal plastic material.

7. The method according to Claims 1 to 6, **characterised in that** the jacket's degree of foaming lies between 10 and 60 %.

8. The method according to one of Claims 1 to 7, **characterised in that** the diameter of the foamed-jacket cells lies between 0.1 mm and 0.5 mm.

## Revendications

1. Procédé destiné à confectionner une gaine en mousse expansée et/ou boursouflée destinée à une conduite tubulaire thermo-isolée flexible, un mélange étant fabriqué à partir de granulés à base de polyéthylène et à partir de granulés à base de polyéthylène auxquels ont été ajouté de petites billes officiant d'agent propulseur, le mélange étant introduit dans une extrudeuse pour y fondre, et la matière fondue étant extrudée sous forme de tube puis expansée et/ou boursouflée au sortir de l'orifice de l'extrudeuse ou après être sortie par ledit orifice, la proportion entre les granulés à base de polyéthylène et les granulés à base de polyéthylène auxquels a été ajouté un agent propulseur étant comprise entre 90 : 10 et 99 : 1.

2. Procédé selon la revendication 1, **caractérisé en ce que** le module d'élasticité du matériau gainant expansé et/ou boursouflé est compris entre 135 et 162 Mpa, et que la densité du matériau gainant est comprise entre 0,560 et 750 g/cm³.

3. Procédé selon la revendication 1 ou 2, **caractérisé en ce que** la gaine (3) est ondulée.

4. Procédé selon l'une des revendications 1 à 3, **caractérisé en ce que** la matière thermoplastique utilisée est un polyéthylène basse densité (LDPE).

5. Procédé selon l'une des revendications 1 à 3, **caractérisé en ce que** la matière thermoplastique utilisée est un polyéthylène linéaire basse densité (LLDPE).

6. Procédé selon l'une des revendications 1 à 3, **caractérisé en ce que** la matière thermoplastique utilisée est un copolymère de l'éthylène, de préférence un copolymère à base de polyéthylène basse densité.

7. Procédé selon l'une des revendications 1 à 6, **caractérisé en ce que** le degré d'expansion de la gaine est compris entre 10 et 60 %.

8. Procédé selon l'une des revendications 1 à 7, **caractérisé en ce que** le diamètre des alvéoles composant la gaine expansée est compris entre 0,1 et 0,5 mm.
